# EUROPEAN PATENT APPLICATION

(11) **EP 4 668 133 A1**
(43) Date of publication of application: **24.12.2025**
(21) Application number: 24756225.9
(22) Date of filing: 07.02.2024
(51) Int. Cl.: G06F 16/438

(54) **INTERACTION METHOD AND APPARATUS BASED ON MEDIA CONTENT, DEVICE AND STORAGE MEDIUM**

(30) Priority: 14.02.2023 CN 202310125539
(71) Applicant: Beijing Zitiao Network Technology Co., Ltd., Beijing 100190 (CN)
(72) Inventor: FANG, Mengying, Beijing 100028 (CN); ZHANG, Nuomeng, Beijing 100028 (CN); SONG, Xin, Beijing 100028 (CN); SHU, Siqi, Beijing 100028 (CN); LI, Yaping, Beijing 100028 (CN)
(74) Representative: Isarpatent
(86) International application number: PCT/CN2024/076617
(87) International publication number: WO 2024/169852

(57) **Abstract**

The present disclosure relates to the technical field of the Internet, and provides a media content based interaction method and apparatus, a device and a storage medium. The method comprises, on a current user side: presenting first media content to a current user on a preset interface, the first media content being posted by a first user; and presenting, at at least one preset position in the first media content, at least one interactive element associated therewith in a superimposed manner, the interaction element being added by a second user, and the preset position associated with the interactive element being set by the second user.

## Description

### CROSS-REFERENCE TO RELATED APPLICATIONS

The present application is based on and claims priority of the Chinese Patent Application No. 202310125539.9 filed on February 14, 2023, the disclosure of which is incorporated by reference herein in its entirety.

### TECHNICAL FIELD

Embodiments of the present disclosure relate to the technical field of the Internet, and in particular to a media content based interaction method and apparatus, a device and a storage medium.

### BACKGROUND

With the continuous development of Internet technologies, applications (APPs) can present a variety of multimedia content to users, and different users can share their own works with each other by posting media content such as videos or pictures.

### SUMMARY

The embodiments of the present disclosure provide a media content based interaction method and apparatus, a device and a storage medium, which can optimize the existing media content based interaction solutions.

In a first aspect, the embodiments of the present disclosure provide a media content based interaction method, which comprises, on a current user side:
presenting first media content to a current user on a preset interface, wherein the first media content is posted by a first user;
presenting, at at least one preset position in the first media content, at least one interactive element associated therewith in a superimposed manner, wherein the interactive element is added by a second user, and the preset position associated with the interactive element is set by the second user.

In a second aspect, the embodiments of the present disclosure provide a media content based interaction method, which comprises, on a second user side:
presenting first media content to a second user in a preset interface, wherein the first media content is posted by a first user;
in response to an interactive element add event being triggered, entering a preset edit interface;
acquiring, based on the preset edit interface, a target media material determined by the second user for the first media content, and determining a target interactive element to be added according to the target media material;
determining, based on a position setting operation input by the second user, a target preset position associated with the target interactive element, wherein the target interactive element is used for presentation in a superimposed manner at the target preset position of the first media content in the process of presenting the first media content on the preset interface.

In a third aspect, the embodiments of the present disclosure further provide a media content based interaction apparatus, configured on a current user side, which comprises:
a first media content presentation module, configured to present first media content to a current user on a preset interface, wherein the first media content is posted by a first user;
an interactive element display module, configured to present, at at least one preset position in the first media content, at least one interactive element associated therewith in a superimposed manner, wherein the interactive element is added by a second user, and the preset position associated with the interactive element is set by the second user.

In a fourth aspect, the embodiments of the present disclosure further provide a media content based interaction apparatus, configured on a second user side, which comprises:
a media content presentation module, configured to present first media content to a second user on a preset interface, wherein the first media content is posted by a first user;
a preset edit interface entry module, configured to enter a preset edit interface in response to an interactive element add event being triggered;
a target interactive element determination module, configured to acquire, based on the preset edit interface, a target media material determined by the second user for the first media content, and determine a target interactive element to be added according to the target media material; and
a target preset position determination module, configured to determine, based on a position setting operation input by the second user, a target preset position associated with the target interactive element, wherein the target interactive element is used for presentation in a superimposed manner at the target preset position of the first media content in the process of presenting the first media content on the preset interface.

In a fifth aspect, the embodiments of the present disclosure further provide an electronic device, the electronic device comprising:
one or more processors; and
a storage device configured to store one or more programs,
wherein the one or more programs, when executed by the one or more processors, cause the one or more processors to implement the media content based interaction method provided by the embodiments of the present disclosure.

In a sixth aspect, the embodiments of the present disclosure further provide a storage medium containing computer executable instructions, which, when executed by a computer processor, are used for implementing the media content based interaction method provided by the embodiments of the present disclosure.

In the media content based interaction solutions provided by the embodiments of the present disclosure, first media content posted by a first user is presented to the current user on a preset interface, and at at least one preset position in the first media content, at least one interactive element associated therewith, which is added by a second user, is presented in a superimposed manner, wherein the preset position associated with the interactive element is set by the second user.

### BRIEF DESCRIPTION OF THE DRAWINGS

The above and other features, advantages and aspects of the embodiments of the present disclosure will become more apparent with reference to the following detailed description in conjunction with the accompanying drawings. Throughout the drawings, the same or similar reference numerals refer to the same or similar elements. It should be understood that the drawings are schematic and that components and elements are not necessarily drawn to scale.
FIG. 1 is a schematic flow chart of a media content based interaction method provided by an embodiment of the present disclosure;
FIG. 2 is a schematic diagram of an interface provided by an embodiment of the present disclosure;
FIG. 3 is a schematic diagram of an interface interaction provided by an embodiment of the present disclosure;
FIG. 4 is a schematic flow chart of another media content based interaction method provided by an embodiment of the present disclosure;
FIG. 5 is a schematic diagram of another interface interaction provided by an embodiment of the present disclosure;
FIG. 6 is a schematic flow chart of another media content based interaction method provided by an embodiment of the present disclosure;
FIG. 7 is a schematic structural diagram of a media content based interaction apparatus provided by an embodiment of the present disclosure;
FIG. 8 is a schematic structural diagram of another media content based interaction apparatus provided by an embodiment of the present disclosure;
FIG. 9 is a schematic structural diagram of an electronic device provided by an embodiment of the present disclosure.

### DETAILED DESCRIPTION

The embodiments of the present disclosure will be described in more detail below with reference to the accompanying drawings. Although certain embodiments of the present disclosure are shown in the drawings, it should be understood that the present disclosure can be implemented in various forms and should not be construed as limited to the embodiments set forth herein. Instead, these embodiments are provided to provide a more thorough and complete understanding of the present disclosure. It should be understood that the drawings and embodiments of the present disclosure are only for illustrative purposes and are not intended to limit the protection scope of the present disclosure.

It should be understood that the steps described in the method embodiments of the present disclosure may be performed in a different order and/or, performed in parallel. Furthermore, method embodiments may include additional steps and/or omit performing the illustrated steps. The scope of the present disclosure is not limited in this respect.

The term "comprise" and variations thereof as used herein are open-ended inclusions, i.e., "comprising but not limited to". The term "based on" means "based at least in part on". The term "one embodiment" means "at least one embodiment"; the term "another embodiment" means "at least one additional embodiment"; the term "some embodiments" means "at least some embodiments". Relevant definitions of other terms will be given in the following description.

It needs to be noted that the concepts such as "first" and "second" mentioned in the present disclosure are only used to distinguish different devices, modules or units, and are not used to limit the order or interdependence of the functions performed by these devices, modules or units.

It should be noted that the modifications of "one" and "plurality" mentioned in the present disclosure are illustrative rather than restrictive, and those skilled in the art should understand that unless otherwise clearly indicated in the context, it should be understood as "one or more".

The names of the messages or information exchanged between multiple devices in the embodiments of the present disclosure are only used for illustrative purposes and are not used to limit the scope of these messages or information.

It can be understood that before using the technical solutions disclosed in the embodiments of the present disclosure, the types, scope of use, usage scenarios, etc. of the personal information involved in the present disclosure should be informed to the user and the user's authorization should be obtained in an appropriate manner in accordance with relevant laws and regulations.

For example, in response to receiving an active request from a user, a prompt message is sent to the user to explicitly prompt the user that the operation requested to be performed will require obtaining and using the user's personal information. Thus, the user can independently choose whether to provide the personal information to software or hardware such as an electronic device, application, server or storage medium that executes the operation of the technical solution of the present disclosure according to the prompt information.

As an optional but non-limiting implementation, in response to receiving an active request from the user, the prompt information may be sent to the user in the form of a pop-up window, for example, in which the prompt information may be presented in text form. In addition, the pop-up window may also carry a selection control for the user to choose "agree" or "disagree" to provide personal information to the electronic device.

It can be understood that the process of informing the user and obtaining the user's authorization described above is merely illustrative and does not constitute a limitation on the implementation of the present disclosure. Other methods that meet the relevant laws and regulations may also be applied to the implementation of the present disclosure.

It can be understood that the data involved in this technical solution (including but not limited to the data itself, the acquisition or use of the data) shall comply with the requirements of relevant laws, regulations and relevant provisions.

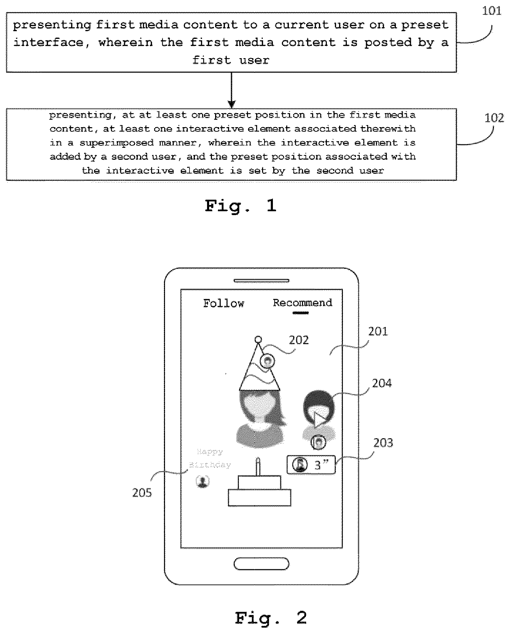

FIG. 1 is a schematic flow chart of a media content based interaction method provided by an embodiment of the present disclosure. The embodiment of the present disclosure is applicable to situations of media content based interaction. This method may be executed by a media content based interaction apparatus, which may be implemented in the form of software and/or hardware. Optionally, it may be implemented by an electronic device, which may be a mobile terminal such as a mobile phone, a smart watch, a tablet computer, or a personal digital assistant, or a device such as a personal computer (PC) or a server.

As shown in FIG. 1, the method comprises, on a current user side:
Step 101: presenting first media content to the current user on a preset interface, wherein the first media content is posted by a first user.

In an embodiment of the present disclosure, the preset interface may be an interface in a preset application. The preset application may provide a media content presentation function, the specific type of which is not limited, and may be installed in an electronic device. The preset interface is configured to present media content, which may include one or more of pictures, videos, text and audio, without specific limitation. The first media content may be understood as the media content currently presented on the preset interface, and the first media content, which is posted by the first user, may be specifically understood as the media work posted by the first user (e.g., posted through a preset application). The current user may be understood as the user who is currently viewing the preset interface.

It can be understood that the first user may confirm whether to allow the second user to add an interactive element based on the first media content in the process of posting the first media content; in some other embodiments, the first media content may further include a predetermined type of media content, such as interactive media content, and the predetermined type of media content posted by the first user supports the second user to add the interactive element to that media content; and when the media content posted by the first user is non-interactive media content, the second user is not supported to perform the interactive element add operation.

Step 102: presenting, at at least one preset position in the first media content, at least one interactive element associated therewith in a superimposed manner, wherein the interactive element is added by a second user, and the preset position associated with the interactive element is set by the second user.

In an embodiment of the present disclosure, with the confirmation of the first user, the second user may be allowed to add an interactive element based on the first media content. Before posting the first media content, the first user may set a user range allowed to add an interactive element. If a user is within the user range, the user may become a second user, wherein the second user may be different from the first user, that is, a user other than a media content publisher may add an interactive element based on the media content posted by the media content publisher; the second user may also be the same as the first user, that is, the media content publisher may add an interactive element based on the media content he or she has already posted. Optionally, the number of the second users may be 0, 1 or more. In the case of 0, it can be considered that no interactive element is added to the first media content, and in the process of presenting the first media content on the preset interface, the interactive element may not be presented. That is, in the process of presenting the first media content to the current user on the preset interface, it may be determined whether the first media content has an associated interactive element. If so, at least one interactive element associated therewith is presented in a superimposed manner at at least one preset position in the first media content. In the case of multiple, i.e., the case that there are different users who have added an interactive element to the first media content, the first media content is associated with multiple interactive elements, and the multiple interactive elements may be presented simultaneously or in batches, etc., without specific limitation.

Exemplarily, the interactive element is associated with the preset position, and the preset position associated with the interactive element is set by the second user. The same preset position may be associated with one or more interactive elements. In the case of multiple, it can be understood that a plurality of interactive elements may be displayed in a superimposed manner at the preset position, which may be added by the same or different second users. Optionally, the second user may also set the size and other related properties of the added interactive element.

Optionally, the interactive element includes at least one media material of pictures, audio, video and text, which may be respectively recorded as a picture interactive element, an audio interactive element, a video interactive element and a text interactive element, and the second user may choose an appropriate type of media material according to his/her own needs to generate the interactive element. Optionally, if at least one interactive element that needs to be currently presented includes a plurality of interactive elements of different types, the plurality of interactive elements of different types may be presented according to a preset style, such as a frame of a set width and/or a set color, or the like.

Optionally, different types of interactive elements may correspond to different presentation forms. For example, a picture interactive element may be presented in the form of displaying a picture, which may include a static picture or a dynamic picture, which may include a photo, an emoji, or the like; a text interactive element may be presented in the form of displaying text; an audio interactive element may be presented in the form of displaying a speech icon, a playback control, or the like; a video interactive element may be presented in the form of displaying a video cover and a playback control, or in the form of playing a video, etc.

FIG. 2 is a schematic diagram of an interface provided by an embodiment of the present disclosure. As shown in FIG. 2, first media content is presented to a current user A on a preset interface 201, wherein the first media content may be, for example, a photo of a user B (a first user) with a birthday cake or a video of blowing candles on his birthday, which is posted by the user B. There are three second users (respectively recorded as user C, user D, and user E) who have added interactive elements on the basis of the first media content (wherein the user C has added two interactive elements). Therefore, when the first media content is presented, at four preset positions of the first media content may be presented four interactive elements associated therewith in a superimposed manner. In this way, when watching the first media content, the user A may see the interactive elements added by the second users. The four interactive elements are a picture interactive element 202, an audio interactive element 203, a video interactive element 204 and a text interactive element 205, respectively. The picture interactive element 202 is a birthday hat picture added by the user C, which is displayed at a preset position corresponding to the head of the user B in the first media content; the text interactive element 205 is the text of "Happy Birthday" added by the user D, which can be displayed; the audio interactive element 203 is a blessing speech added by the user E, which may be presented in the form of displaying a speech icon, or a speech duration such as 3 seconds in the figure, wherein the size of the speech icon may be positively correlated with the speech duration; the video interactive element 204 may be a head video added by the user C, which may be presented in the form of displaying a video cover and a playback control, and the associated preset position may be next to the user B in the first media content, thus achieving the group-photo effect.

In the media content based interaction method provided by the embodiment of the present disclosure, the first media content posted by the first user is presented to the current user on the preset interface, and at at least one preset position in the first media content, at least one interactive element associated therewith, which is added by the second user, is presented in a superimposed manner, wherein the preset position associated with the interactive element is set by the second user. By adopting the above technical solution, the interactive elements set and added by the second user can be presented in the media content posted by the first user, thereby enriching the ways of interaction between the users and effectively improving the interaction effect of the users.

In some embodiments, the interactive element is associated with a user identifier of the second user. The advantage of such a setting is that the user who has added the interactive element can be intuitively viewed on the preset interface, wherein the user identifier may be, for example, a user name, a user nickname, or a user virtual character, etc. Optionally, different types of interactive elements may be associated with user identities in different ways. As shown in FIG. 2, the picture interactive element 202 is associated with a virtual character of the user C, which is displayed partially overlapping with the picture interactive element 202; the speech icon of the audio interactive element 203 includes a virtual character of the user D; the video interactive element 204 is associated with a virtual character of the user C, which is displayed partially overlapping with the video cover; the text interactive element 205 is associated with a virtual character of the user E, which is displayed below the text.

In some embodiments, after presenting, at at least one preset position in the first media content, at least one interactive element associated therewith in a superimposed manner, the method further comprises: in response to a preset trigger operation of the current user on a first interactive element among the at least one interactive element, playing a sound associated with the first interactive element, wherein the first interactive element includes audio or video. The advantage of such a setting is that the current user can freely choose the timing to listen to the audio in the interactive element, thus further improving the interaction effect. The preset trigger operation may specifically be a preset trigger operation inputted for a playback control associated with the first interactive element, such as a click or long press operation.

Optionally, when the first media content includes audio or video, in response to a preset trigger operation of the current user on a first interactive element among the at least one interactive element, a sound associated with the first interactive element is played. The advantage of such a setting is that it is possible to prevent the automatic playback of the sound in the interactive element from interfering with the playback of the first media content. Optionally, simultaneously when the sound associated with the first interactive element is played, a weakening process is performed on the sound associated with the first media content, wherein the weakening process may, for example, be lowering the playback volume or muting the sound, so that the current user can hear the sound associated with the first interactive element more clearly. Optionally, after the sound associated with the first interactive element is played, the weakening process on the sound associated with the first media content is canceled. As shown in FIG. 2, if the first media content is a video of the user B's birthday, and the sound associated with the video is a Happy Birthday song, in the process of playing the first media content on the preset interface, an initial presentation state of the audio interactive element 203 is displaying the speech icon. If the current user A triggers the speech icon by clicking or other means, the birthday blessing speech associated with the audio interactive element 203 can be played, and the playback volume of the Happy Birthday song can be lowered or muted. After the playback of the 3-second speech is finished, the playback volume of the Happy Birthday song is restored.

In some embodiments, after presenting, at at least one preset position in the first media content, at least one interactive element associated therewith in a superimposed manner, the method further comprises: in response to a position change operation of the current user on a second interactive element among the at least one interactive element, moving the second interactive element to a target position indicated by the position change operation for presentation. The advantage of such a setting is that the current user can be allowed to freely change a display position of the interactive element, so as to better view the first media content or other interactive elements blocked by the second interactive element.

Exemplarily, the position change operation may be a drag operation, and the target position may be an end position corresponding to the drag operation (e.g., a position where the second interactive element is located at the moment of release by the user). If a plurality of interactive elements are currently presented, the position change operation can be sequentially input for the plurality of interactive elements.

In some embodiments, after moving the second interactive element to a target position indicated by the position change operation for presentation, the method further comprises: in response to a preset position restore event being triggered, restoring the second interactive element to the preset position associated therewith for presentation. The advantage of such a setting is that the second interactive element, after the display position is changed, can be restored to the preset position set by the second user for presentation.

Optionally, the preset position restore event may be a preset restore control being triggered, or the preset position restore event may be automatically triggered after a preset time (e.g. 5 seconds) has elapsed since the end of the drag operation. Optionally, if the current user inputs the position change operation on at least two interactive elements, the preset position restore event is automatically triggered after a preset time has elapsed since the end of the last position change operation.

In some embodiments, after presenting, at at least one preset position in the first media content, at least one interactive element associated therewith in a superimposed manner, the method further comprises: receiving an interaction operation of a first preset type, which is input by the current user, on a third interactive element among the at least one interactive element. The advantage of such a setting is that the current user can be allowed to conveniently realize interaction based on the interactive elements while watching the first media content.

Exemplarily, the third interactive element may be any interactive element presented on the preset interface. The interaction operation of the first preset type may be, for example, a like operation on the third interactive element, a like operation on the second user who has added the third interactive element, sending a message to the second user who has added the third interactive element, or viewing a personal homepage of the second user who has added the third interactive element, or the like. Optionally, at the time of sending a message to the second user who has added the third interactive element, the message sent may reference the third interactive element.

In some embodiments, after presenting, at at least one preset position in the first media content, at least one interactive element associated therewith in a superimposed manner, the method further comprises: in response to a preset view operation input by the current user, displaying an interactive element interface, wherein the interactive element interface is configured to present a set of interactive elements associated with the first media content, and the set of interactive elements includes the at least one interactive element. The advantage of such a setting is that the interactive elements associated with the first media content can be displayed centrally, allowing the current user to comprehensively view the interactive elements associated with the first media content on a more pure interface.

Exemplarily, the preset view operation may be, for example, a trigger operation on any interactive element or a user identifier associated with any interactive element, and the trigger operation may be, for example, a click or a long press, or the like.

Exemplarily, when the set of interactive elements is presented on the interactive element interface, the display regions occupied by the interactive elements in the set of interactive elements on the interactive element interface may be of the same size, so that the interactive elements can be presented in a more regular form, such as in the form of a list or matrix. Optionally, the interactive elements in the set of interactive elements may be presented on the interactive element interface in the order of addition time (such as reverse order or forward order).

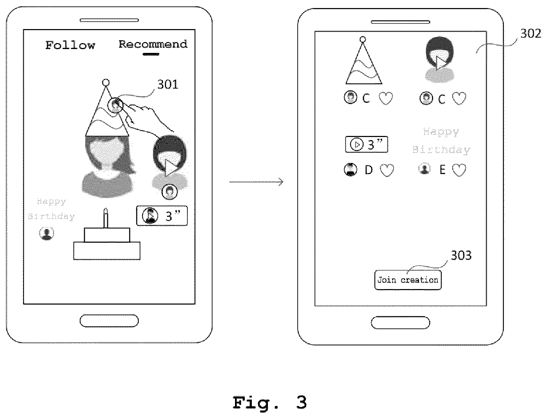

FIG. 3 is a schematic diagram of an interface interaction provided by an embodiment of the present disclosure. As shown in FIG. 3, assuming that the user A clicks on a user identifier 301 associated with an interactive element, the user may enter an interactive element interface 302. On the interactive element interface 302, the interactive elements in the set of interactive elements associated with the first media content are presented in a matrix form, and a user identifier, such as a virtual character and a nickname, of the second user, may be displayed below each interactive element presented.

In some embodiments, there may further comprise: receiving an interaction operation of a second preset type, which is input by the current user, on a fourth interactive element in the set of interactive elements. The advantage of such a setting is that the current user can be allowed to conveniently realize interaction based on the interactive elements on the interactive element interface.

Exemplarily, the fourth interactive element may be any interactive element presented on the interactive element interface. The interaction operation of the second preset type may be, for example, a like operation on the fourth interactive element, a like operation on the second user who has added the fourth interactive element, sending a message to the second user who has added the fourth interactive element, or viewing a personal homepage of the second user who has added the fourth interactive element, or the like. Optionally, at the time of sending a message to the second user who has added the fourth interactive element, the message sent may reference the fourth interactive element. As shown in FIG. 3, a like icon may also be displayed below each interactive element presented on the interactive element interface 302.

In some embodiments, after presenting, at at least one preset position in the first media content, at least one interactive element associated therewith in a superimposed manner, the method further comprises: in response to a hide operation of the current user on a fifth interactive element among the at least one interactive element, performing a hide process on the fifth interactive element, wherein the fifth interactive element may be any one or more of the at least one interactive element. Optionally, the fifth interactive element may be all of the at least one interactive element, that is, it is possible to hide the interactive elements currently being presented at one time.

In some embodiments, after presenting, at at least one preset position in the first media content, at least one interactive element associated therewith in a superimposed manner, the method further comprises: presenting, at the at least one preset position in the first media content, the at least one interactive element associated therewith in a superimposed manner within a preset playback progress range of the first media content, wherein the at least one interactive element has a preset association relationship with the preset playback progress range. The advantage of such a setting is that the presentation timing and presentation duration of the interactive element can be controlled, so that the interactive element can be presented within a specified playback progress range of the first media content, thereby improving the effect of presentation in a superimposed manner.

Optionally, the preset association relationship is set by the second user. When adding an interactive element, the second user may specify a preset playback progress range associated with the added interactive element to implement the setting of the preset association relationship. By adopting this solution, the second user can choose the appropriate presentation timing and presentation duration for the interactive element according to his own needs, thereby further improving the interaction effect. In addition, since the preset playback progress ranges associated with different interactive elements are set by the second user, there may occur a case that different interactive elements correspond to different preset playback progress ranges. In this case, different interactive elements can be presented in different time periods.

In some embodiments, there further comprise: presenting second media content to the current user on the preset interface; in response to an interactive element add event being triggered, entering a preset edit interface; acquiring, based on the preset edit interface, a target media material determined by the current user for the second media content, and determining a target interactive element to be added according to the target media material; determining, based on a position setting operation input by the current user, a target preset position associated with the target interactive element. The advantage of such a setting is that the current user is allowed to add an interactive element to the currently presented media content, thus further improving the interaction effect.

Exemplarily, the second media content may be the same as or different from the first media content, and the current user may add an interactive element to the media content to which no interactive elements have been added or to the media content to which an interactive element has been added. There is no limitation on the way of triggering the interactive element add event, and the current user may trigger an interactive element add control. The interactive element add control may be displayed on the preset interface on which the first media content is presented; alternatively, the interactive element add control may be displayed on a preset interaction panel, which may be presented on the preset interface, for example, after the current user triggers a preset interaction control on the preset interface or after the current user performs a preset gesture operation on the preset interface; the interactive element add control may also be displayed on the interactive element interface, such as "Join Creation" button 303 shown in FIG. 3.

Exemplarily, the preset edit interface may include a type switch control, through which the current user may choose to enter an edit sub-interface of a different interactive element type. For example, an edit sub-interface of an expression type may include an emoji list, and the target media material may be determined by selecting an emoji from the emoji list; an edit sub-interface of a picture or video type may include a camera or an album list, and the target media material may be determined by taking pictures or videos with the camera, or by selecting pictures or videos from the album list; an edit sub-interface of an audio type may include a recorder, and the target media material may be determined by recording audio with the recorder; an edit sub-interface of a text type may include a text editor, etc., and the target media material may be determined by entering text with the text editor and setting alignment, color, and text style, etc. Optionally, the users may also be provided with an automated material processing function, such as a smart matte function, to reduce the media material editing difficulty and improve the interactive element adding efficiency.

In some embodiments, there further comprise: determining, based on a range setting operation input by the current user, a target preset playback progress range that has a preset association relationship with the target interactive element. The advantage of such a setting is that the current user is allowed to set an associated preset playback progress range for the interactive element he has added, so that the added interactive element can be presented in a superimposed manner on the presented content within the target preset playback progress range of the second media content, thereby improving the interaction effect.

Exemplarily, the range setting operation may be an operation of selecting a playback time period of the second media content, such as selecting a start playback time and an end playback time, thereby determining the target preset playback progress range; in the case where the media content is a video, it may also be an operation of selecting a start frame and an end frame, thereby determining the target preset playback progress range. Assuming that the second media content is the same as the first media content, as shown in FIG. 2, a head image of the first user appears from the 5th second to the 10th second during the playback of the first media content, and if the current user wants to add his own head image on a side of the head image of the first user to achieve the group-photo effect, the target preset playback progress range may be set to from the 5th second to the 10th second; after the target interactive element is added, when the first media content is played again, the head image of the current user will be presented in a superimposed manner in the playback interval from the 5th second to the 10th second.

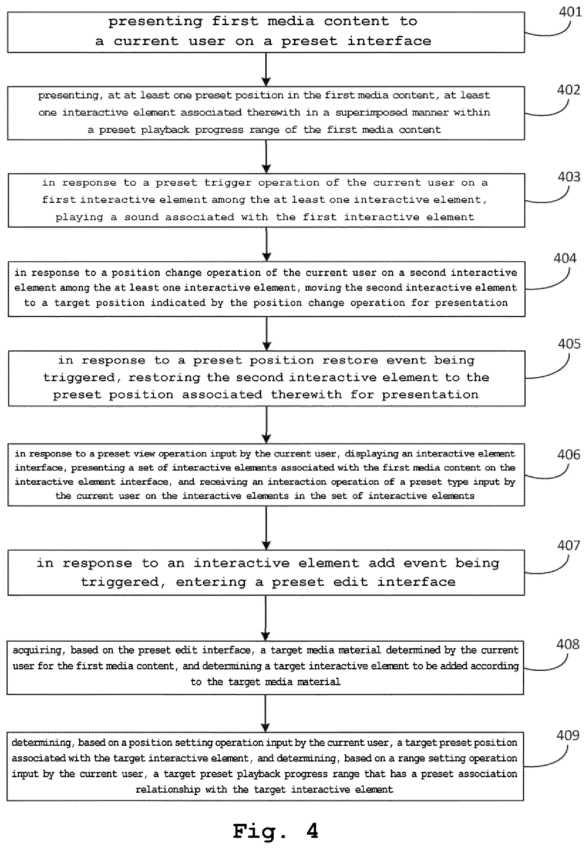

FIG. 4 is a schematic flow chart of another media content based interaction method provided by an embodiment of the present disclosure, and this embodiment of the present disclosure is optimized based on each optional solution in the above embodiments. Specifically, the method comprises the following steps:
Step 401: presenting first media content to a current user on a preset interface,
wherein the first media content is posted by a first user.

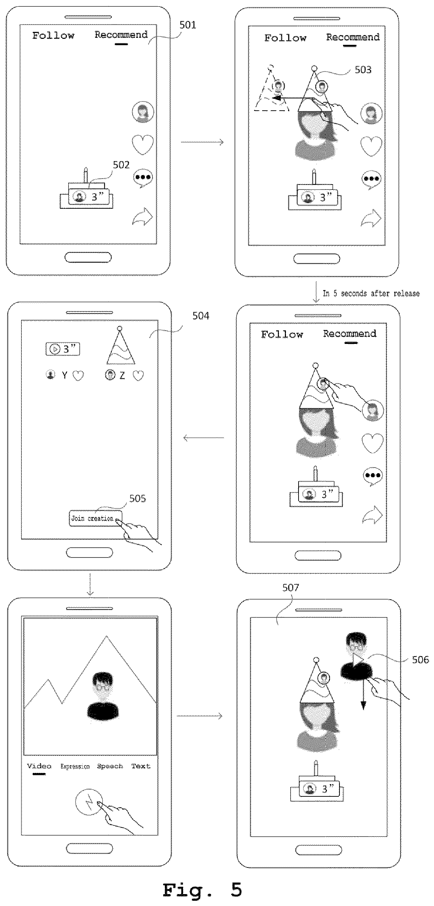

FIG. 5 is a schematic diagram of another interface interaction provided by an embodiment of the present disclosure. As shown in FIG. 5, a birthday video posted by a user X (first user) is presented on a preset interface 501.

Step 402: presenting, at at least one preset position in the first media content, at least one interactive element associated therewith in a superimposed manner within a preset playback progress range of the first media content,
wherein the interactive element is added by a second user and is associated with a user identifier of the second user, the preset position associated with the interactive element is set by the second user, and the at least one interactive element has a preset association relationship with the preset playback progress range.

As shown in FIG. 5, assuming that a first interactive element 502 is an audio interactive element containing a birthday blessing speech added by a user Y, the preset playback progress range associated with the first interactive element 502 is an entire range of the first media content, and the associated preset position is a position where the birthday cake is, and therefore, when the first media content starts to be played on the preset interface 501, the first interactive element 502 can be displayed at the birthday cake. The second interactive element 503 is a birthday hat picture added by a user Z, the associated preset playback progress range is a time period in which the user X appears in a picture in the first media content, the associated preset position is a position of the head image of the user X, and therefore, when the user X appears in the picture, the second interactive element 503 is presented at the position of the head image of the user X.

Step 403: in response to a preset trigger operation of the current user on a first interactive element among the at least one interactive element, playing a sound associated with the first interactive element.

Exemplarily, if the current user wants to listen to the sound in the first interactive element 502, by clicking a play control therein, the playing of the sound associated therewith may be triggered.

Step 404: in response to a position change operation of the current user on a second interactive element among the at least one interactive element, moving the second interactive element to a target position indicated by the position change operation for presentation.

Exemplarily, if the current user wants to view a hairstyle of the user X that is blocked by the second interactive element 503, the second interactive element 503 may be moved to the target position by dragging the second interactive element 503.

Step 405: in response to a preset position restore event being triggered, restoring the second interactive element to the associated preset position for presentation.

Exemplarily, the presentation position of the second interactive element 503 may be restored in 5 seconds after release by the user.

Step 406: in response to a preset view operation input by the current user, displaying an interactive element interface, and presenting a set of interactive elements associated with the first media content on the interactive element interface, and receiving an interaction operation of a preset type, which is input by the current user, on an interactive element in the set of interactive elements.

As shown in FIG. 5, the user enters an interactive element interface 504 by clicking on the user identifier associated with the second interactive element 503. A set of interactive elements associated with the first media content are presented on the interactive element interface, the set of interactive elements currently including a first interactive element and a second interactive element. The user may input an interaction operation such as like on the interactive elements on the interactive element interface 504.

Step 407: in response to an interactive element add event being triggered, entering a preset edit interface.

As shown in FIG. 5, the interactive element interface 504 includes an interactive element add control 505, and the user enters the preset edit interface upon clicking the interactive element add control 505.

Step 408: acquiring, based on the preset edit interface, a target media material determined by the current user for the first media content, and determining a target interactive element to be added according to the target media material.

Exemplarily, as shown in FIG. 5, the current user may choose to record a video as the target media material, and extract, using a smart matte function, the head image of the current user from a video picture as a target subject, that is, remove the background from the video picture, and generate an initial target interactive element 506, which is displayed on a preview interface 507.

Step 409: determining, based on a position setting operation input by the current user, a target preset position associated with the target interactive element, and determining, based on a range setting operation input by the current user, a target preset playback progress range that has a preset association relationship with the target interactive element.

Exemplarily, the user may freely drag the target interactive element 506 on the preview interface 507 to determine its associated target preset position, and may also determine the target preset playback progress range by selecting the start playback time and the end playback time to complete the addition of the target interactive element.

With the media content based interaction method provided by the embodiment of the present disclosure, while viewing the media content posted by the media content publisher on the preset interface, the users can also view the interactive elements added by users other than the publisher, can choose to listen to the sounds in the interactive elements and freely change the presentation positions of the interactive elements on the preset interface, can interact with the users who add the interactive elements through the interactive elements, and when they have the need to add interactive elements, can enter the preset edit interface and add the interactive elements of their own design at the appropriate position of the media content and within the appropriate playback range, thereby effectively improving the interaction effect.

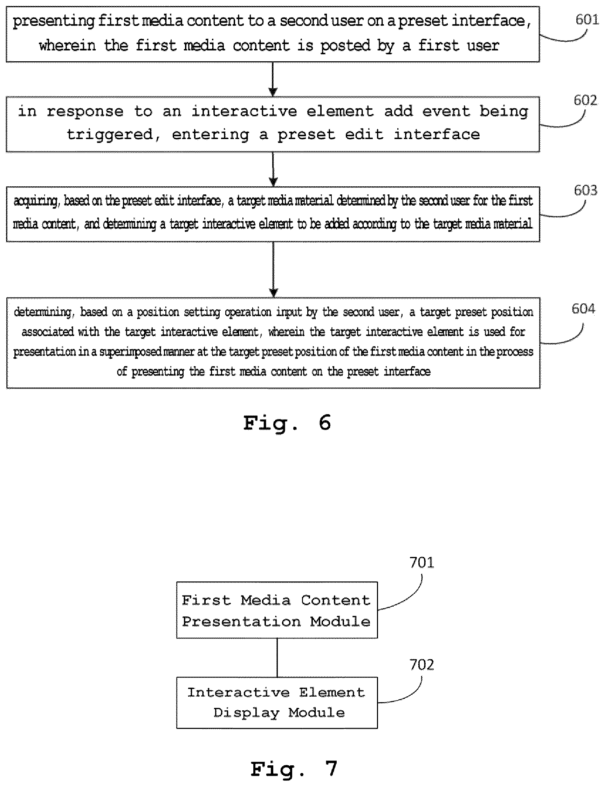

FIG. 6 is a schematic flow chart of another media content based interaction method provided by an embodiment of the present disclosure. The embodiment of the present disclosure is applicable to situations of media content based interaction. This method may be executed by a media content based interaction apparatus, which may be implemented in the form of software and/or hardware. Optionally, it may be implemented by an electronic device.

As shown in FIG. 6, the method, on a second user side, comprises:
Step 601: presenting first media content to a second user on a preset interface, wherein the first media content is posted by a first user.

Exemplarily, the first media content in the embodiment of the present disclosure may currently be media content to which no interactive elements have been added or media content to which an interactive element has been added, that is, the second user may perform interactive element addition to the media content to which no interactive elements have been added or to the media content to which an interactive element has been added. For the way of triggering the interactive element add event, please refer to the relevant content in the foregoing, which will not be repeated here.

Step 602: in response to an interactive element add event being triggered, entering a preset edit interface.

Exemplarily, for the way of implementing the preset edit interface, please refer to the relevant content in the foregoing, which will not be repeated here.

Step 603: acquiring, based on the preset edit interface, a target media material determined by the second user for the first media content, and determining a target interactive element to be added according to the target media material.

Exemplarily, for the determination and acquisition of the target media material, and the determination process of the target interactive element, please refer to the relevant content in the foregoing, which will not be repeated here.

Step 604: determining, based on a position setting operation input by the second user, a target preset position associated with the target interactive element, wherein the target interactive element is used for presentation in a superimposed manner at the target preset position of the first media content in the process of presenting the first media content on the preset interface.

Exemplarily, the position setting operation may be, for example, a move operation on the target interactive element. For example, the first media content and the target interactive element are presented on the preset edit interface, and the user moves the target interactive element by a drag operation or the like, and after receiving the user's confirmation instruction, the current position of the target interactive element is determined as the target preset position associated with the target interactive element.

In the media content based interaction method provided by the embodiment of the present disclosure, first media content posted by a first user is presented to a second user on a preset interface; in response to an interactive element add event being triggered, a preset edit interface is entered; a target media material determined by the second user for the first media content is acquired based on the preset edit interface, and a target interactive element to be added is determined according to the target media material; based on a position setting operation input by the second user, a target preset position associated with the target interactive element is determined, wherein the target interactive element is used for presentation in a superimposed manner at the target preset position of the first media content in the process of presenting the first media content on the preset interface. By adopting the above technical solution, the users are allowed to perform interaction by adding interactive elements to the media content posted by others, and the position of the interactive elements is determined by the users, so that the interactive elements can be presented in a superimposed manner on the content at the designated position of the media content according to the users' requirements, thereby enriching the ways of interaction between the users and effectively improving the interaction effect of the users.

In some embodiments, there further comprise: determining, based on a range setting operation input by the second user, a target preset playback progress range that has a preset association relationship with the target interactive element, wherein the target interactive element is used for presentation in a superimposed manner at the target preset position of the first media content within the target preset playback progress range for presenting the first media content on the preset interface. The advantage of such a setting is that the second user is allowed to set, for the interactive element he has added, a preset playback progress range associated therewith, so that the added interactive element can be presented in a superimposed manner on the presented content within the target preset playback progress range of the first media content, thereby improving the interaction effect, wherein for the determining process of the target preset playback progress range, please refer to the relevant content in the foregoing, which will not be repeated here.

FIG. 7 is a schematic structural diagram of a media content based interaction apparatus provided by an embodiment of the present disclosure. As shown in FIG. 7, the apparatus, which is configured on a current user side, comprises:
a first media content presentation module 701, configured to present first media content to the current user on a preset interface, wherein the first media content is posted by a first user;
an interactive element display module 702, configured to present, at at least one preset position in the first media content, at least one interactive element associated therewith in a superimposed manner, wherein the interactive element is added by a second user, and the preset position associated with the interactive element is set by the second user.

In the media content based interaction apparatus provided by the embodiment of the present disclosure, the first media content posted by the first user is presented to the current user on the preset interface, and at at least one preset position in the first media content, at least one interactive element associated therewith, which is added by the second user, is presented in a superimposed manner, wherein the preset position associated with the interactive element is set by the second user. By adopting the above technical solution, the interactive elements set and added by the second user can be presented in the media content posted by the first user, thereby enriching the ways of interaction between the users and effectively improving the interaction effect of the users.

Optionally, the interactive element is associated with a user identifier of the second user.

Optionally, the interactive element includes at least one media material of pictures, audio, video and text.

Optionally, the apparatus further comprises:
a sound playing module, configured to play, in response to a preset trigger operation of the current user on a first interactive element among the at least one interactive element, a sound associated with a second interactive element, after presenting, at the at least one preset position in the first media content, the at least one interactive element associated therewith in a superimposed manner, wherein the first interactive element includes audio or video.

Optionally, the sound playing module is specifically configured to: when the first media content includes audio or video, in response to the preset trigger operation of the current user on the first interactive element among the at least one interactive element, play a sound associated with the first interactive element and perform a weakening process on the sound associated with the first media content.

Optionally, the apparatus further comprises:
a position change module, configured to move, in response to a position change operation of the current user on the second interactive element among the at least one interactive element, the second interactive element to a target position indicated by the position change operation for presentation, after presenting, at the at least one preset position in the first media content, the at least one interactive element associated therewith in a superimposed manner.

Optionally, the apparatus further comprises:
a position restore module, configured to restore, in response to a preset position restore event being triggered, the second interactive element to the preset position associated therewith for presentation, after moving the second interactive element to the target position indicated by the position change operation for presentation.

Optionally, the apparatus further comprises:
an interactive element interface display module, configured to display an interactive element interface in response to a preset view operation input by the current user, after presenting, at the at least one preset position in the first media content, the at least one interactive element associated therewith in a superimposed manner, wherein the interactive element interface is configured to present a set of interactive elements associated with the first media content, and the set of interactive elements includes the at least one interactive element.

Optionally, the apparatus further comprises:
a first interactive operation receiving module, configured to receive an interaction operation of a first preset type, which is input by the current user, on a third interactive element among the at least one interactive element; and/or
a second interactive operation receiving module, configured to receive an interaction operation of a second preset type, which is input by the current user, on a fourth interactive element in the set of interactive elements.

Optionally, the interactive element display module is specifically configured to:
presenting, at the at least one preset position in the first media content, the at least one interactive element associated therewith in a superimposed manner within a preset playback progress range of the first media content, wherein the at least one interactive element has a preset association relationship with the preset playback progress range.

Optionally, the apparatus further comprises:
a second media content presentation module, configured to present second media content to the current user on the preset interface;
an edit interface entry module, configured to enter a preset edit interface in response to an interactive element add event being triggered;
a target interactive element adding module, configured to acquire, based on the preset edit interface, a target media material determined by the current user for the second media content, and determine a target interactive element to be added according to the target media material;
a position setting module, configured to determine, based on the position setting operation input by the current user, a target preset position associated with the target interactive element.

Optionally, the apparatus further comprises:
a progress range setting module, configured to determine, based on the range setting operation input by the current user, a target preset playback progress range that has a preset association relationship with the target interactive element.

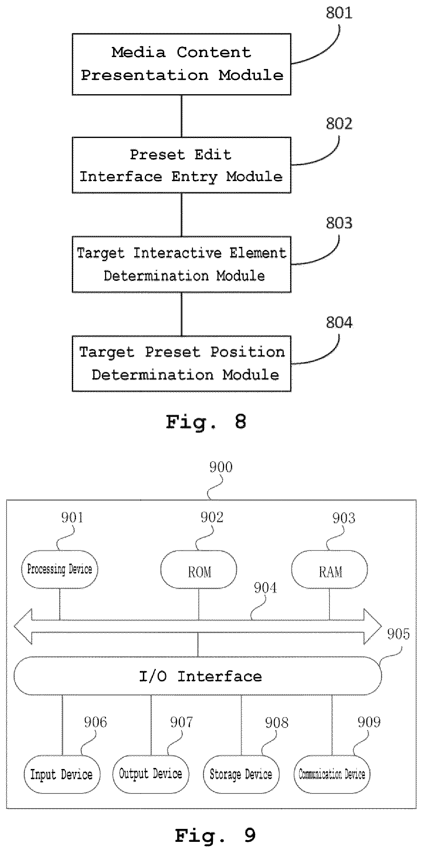

FIG. 8 is a schematic structural diagram of another media content based interaction apparatus provided by an embodiment of the present disclosure. As shown in FIG. 8, the apparatus, which is configured on a second user side, comprises:
a media content presentation module 801, configured to present first media content to the second user on a preset interface, wherein the first media content is posted by a first user;
a preset edit interface entry module 802, configured to enter a preset edit interface in response to an interactive element add event being triggered;
a target interactive element determination module 803, configured to acquire, based on the preset edit interface, a target media material determined by the second user for the first media content, and determine a target interactive element to be added according to the target media material;
a target preset position determination module 804, configured to determine, based on a position setting operation input by the second user, a target preset position associated with the target interactive element, wherein the target interactive element is used for presentation in a superimposed manner at the target preset position of the first media content in the process of presenting the first media content on the preset interface.

With the media content based interaction apparatus provided by the embodiment of the present disclosure, the users are allowed to perform interaction by adding interactive elements to the media content posted by others, and the position of the interactive elements is determined by the users, so that the interactive elements can be presented in a superimposed manner on the content at the designated position of the media content according to the users' requirements, thereby enriching the ways of interaction between the users and effectively improving the interaction effect of the users.

The media content based interaction apparatus provided by the embodiment of the present disclosure may perform the media content based interaction method provided by the respective embodiments of the present disclosure, and possesses the corresponding functional modules and beneficial effects of the performed method.

It is worth noting that the various units and modules comprised in the above-mentioned apparatus are only divided according to functional logic, but are not limited to said division, as long as the corresponding functions can be achieved; in addition, the specific names of the functional units are only for the convenience of distinguishing each other, and are not used to limit the protection scope of the embodiment of the present disclosure.

FIG. 9 is a schematic structural diagram of an electronic device provided by an embodiment of the present disclosure. Reference is made below to FIG. 9, which shows a schematic structural diagram of an electronic device (e.g., a terminal device or a server in FIG. 9) 900 suitable for implementing an embodiment of the present disclosure. The terminal devices in the embodiment of the present disclosure may include, but are not limited to, mobile terminals such as mobile phones, laptop computers, digital broadcast receivers, personal digital assistants (PDAs), tablet computers (PADs), portable multimedia players (PMPs), vehicle-mounted terminals (such as vehicle-mounted navigation terminals), etc., as well as fixed terminals such as digital TVs, desktop computers, etc. The electronic device shown in FIG. 9 is merely an example and should not limit the functions and scope of use of the embodiment of the present disclosure.

As shown in FIG. 9, an electronic device 900 may comprise a processing device (such as a central processing unit, a graphics processor, etc.) 901, which can perform various appropriate actions and processes according to a program stored in a read-only memory (ROM) 902 or a program loaded from a storage device 908 to a random access memory (RAM) 903. In the RAM 903, various programs and data necessary for the operation of the electronic device 900 are also stored. The processing device 901, the ROM 902, and the RAM 903 are connected to one another via a bus 904. An edit/output (I/O) interface 905 is also connected to the bus 904 .

Typically, the following devices may be connected to the I/O interface 905: an input device 906 including, for example, a touch screen, a touchpad, a keyboard, a mouse, a camera, a microphone, an accelerometer, a gyroscope, etc.; an output device 907 including, for example, a liquid crystal display (LCD), a speaker, a vibrator, etc.; a storage device 908 including, for example, a magnetic tape, a hard disk, etc.; and a communication device 909. The communication device 909 may allow the electronic device 900 to communicate with other devices wirelessly or by wire to exchange data. Although FIG. 9 shows the electronic device 900 possessing various devices, it should be understood that it is not required to implement or possess all of the devices shown. A greater or smaller number of devices may alternatively be implemented or provided.

In particular, according to an embodiment of the present disclosure, the process described above with reference to the flow chart may be implemented as a computer software program. For example, an embodiment of the present disclosure provides a computer program product, which comprises a computer program carried on a non-transitory computer-readable medium, and the computer program contains program codes for executing the method shown in the flowchart. In such an embodiment, the computer program may be downloaded and installed from a network via the communication device 909, or installed from the storage device 908, or installed from the ROM 902. The computer program, when executed by the processing device 901, performs the above functions defined in the method of the embodiments of the present disclosure.

The names of the messages or information exchanged between a plurality of devices in the embodiments of the present disclosure are only used for illustrative purposes and are not used to limit the scope of these messages or information.

The electronic device provided by the embodiment of the present disclosure and the media content based interaction method provided by the above embodiments belong to the same inventive concept. For the technical details not fully described in this embodiment, please refer to the above embodiments. This embodiment has the same beneficial effects as the above embodiments.

An embodiment of the present disclosure provides a computer storage medium on which a computer program is stored, wherein the program, when executed by a processor, implements the media content based interaction method provided by the above embodiments.

It should be noted that the computer-readable medium mentioned above in the present disclosure may be a computer-readable signal medium or a computer-readable storage medium or any combination of the two. The computer-readable storage medium may be, for example but not limited to, an electronic, magnetic, optical, electromagnetic, infrared, or semiconductor system, apparatus, or device, or any combination of the foregoing. More specific examples of computer-readable storage media may include, but are not limited to, an electrical connection having one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the present disclosure, the computer-readable storage medium may be any tangible medium that contains or stores a program for use by or in connection with an instruction execution system, apparatus, or device. In the present disclosure, the computer-readable signal medium may include a data signal propagated in a baseband or as a part of a carrier wave, in which a computer-readable program code is carried. Such propagated data signals may take a variety of forms, including but not limited to electromagnetic signals, optical signals, or any suitable combination of the foregoing. The computer-readable signal medium may also be any computer-readable medium other than computer-readable storage media and can send, propagate, or transport a program for use by or in connection with an instruction execution system, apparatus, or device. The program code embodied on the computer-readable medium may be transmitted using any appropriate medium, including but not limited to: wire, optical cable, RF (radio frequency), etc., or any suitable combination of the foregoing.

In some embodiments, the client and server may communicate using any currently known or later developed network protocol such as HyperText Transfer Protocol (HTTP), and may be interconnected with any form or medium of digital data communication (e.g., a communication network). Examples of communication networks include a local area network ("LAN"), a wide area network ("WAN"), an internetwork (e.g., the Internet), and a peer-to-peer network (e.g., an ad hoc peer-to-peer network), as well as any currently known or later developed network.

The computer-readable medium may be included in the electronic device, or may exist independently without being incorporated into the electronic device.

The computer-readable medium carries one or more programs, which, when executed by an electronic device, causes the electronic device to: present first media content to a current user on a preset interface, wherein the first media content is posted by a first user; present, at at least one preset position in the first media content, at least one interactive element associated therewith in a superimposed manner, wherein the interactive element is added by a second user, and the preset position associated with the interactive element is set by the second user.

Alternatively, the computer-readable medium carries one or more programs, which, when executed by the electronic device, causes the electronic device to: present first media content to a second user on a preset interface, wherein the first media content is posted by a first user; in response to an interactive element add event being triggered, enter a preset edit interface; acquire, based on the preset edit interface, a target media material determined by the second user for the first media content, and determine a target interactive element to be added according to the target media material; determine, based on a position setting operation input by the second user, a target preset position associated with the target interactive element, wherein the target interactive element is used for presentation in a superimposed manner at the target preset position of the first media content in the process of presenting the first media content on the preset interface.

Computer program code for performing operations of the present disclosure may be written in one or more programming languages, or a combination thereof, including but not limited to object-oriented programming languages such as Java, Smalltalk, C++, and conventional procedural programming languages such as "C" or similar programming languages. The program code may execute entirely on a user's computer, partly on the user's computer, as a stand-alone software package, partly on the user's computer and partly on a remote computer or entirely on the remote computer or server. In cases involving a remote computer, the remote computer may be connected to the user's computer through any type of network, including a local area network (LAN) or a wide area network (WAN), or may be connected to an external computer (e.g., through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, a program segment, or a portion of code, which contains one or more executable instructions for implementing the specified logical functions. It should also be noted that, in some alternative implementations, the functions noted in the blocks may occur out of the order noted in the figures. For example, two blocks shown in succession may, in fact, be executed substantially in parallel, or they may sometimes be executed in the reverse order, depending on the functionality involved. It should also be noted that each block in the block diagram and/or flowchart, and combinations of blocks in the block diagram and/or flowchart, can be implemented by a dedicated hardware-based system that performs the specified functions or operations, or can be implemented by a combination of dedicated hardware and computer instructions.

The involved units described in the embodiments in the present disclosure may be implemented by software or by hardware. In some cases, the name of a module does not constitute a limitation on the module itself. For example, the first media content presentation module may also be described as "a module that presents first media content to a current user on a preset interface, wherein the first media content is posted by a first user".

The functions described above herein may be performed at least in part by one or more hardware logic components. For example, and without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include electrical connections based on one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

In accordance with one or more embodiments of the present disclosure, there is provided a media content based interaction method, which comprises, on a current user side:
presenting first media content to a current user on a preset interface, wherein the first media content is posted by a first user;
presenting, at at least one preset position in the first media content, at least one interactive element associated therewith in a superimposed manner, wherein the interactive element is added by a second user, and the preset position associated with the interactive element is set by the second user.

In accordance with one or more embodiments of the present disclosure, the interactive element is associated with a user identifier of the second user.

In accordance with one or more embodiments of the present disclosure, the interactive element includes at least one media material of pictures, audio, video and text.

In accordance with one or more embodiments of the present disclosure, after presenting, at at least one preset position in the first media content, at least one interactive element associated therewith in a superimposed manner, the method further comprises:
playing, in response to a preset trigger operation of the current user on a first interactive element among the at least one interactive element, a sound associated with the first interactive element, wherein the first interactive element includes audio or video.

In accordance with one or more embodiments of the present disclosure, the playing, in response to a preset trigger operation of the current user on a first interactive element among the at least one interactive element, a sound associated with the first interactive element comprises:
when the first media content includes audio or video, in response to the preset trigger operation of the current user on the first interactive element among the at least one interactive element, playing the sound associated with the first interactive element and performing a weakening process on the sound associated with the first media content.

In accordance with one or more embodiments of the present disclosure, after presenting, at at least one preset position in the first media content, at least one interactive element associated therewith in a superimposed manner, the method further comprises:
in response to a position change operation of the current user on a second interactive element among the at least one interactive element, moving the second interactive element to a target position indicated by the position change operation for presentation.

In accordance with one or more embodiments of the present disclosure, after the moving the second interactive element to a target position indicated by the position change operation for presentation, the method further comprises:
in response to a preset position restore event being triggered, restoring the second interactive element to the preset position associated therewith for presentation.

In accordance with one or more embodiments of the present disclosure, after presenting, at at least one preset position in the first media content, at least one interactive element associated therewith in a superimposed manner, the method further comprises:
in response to a preset view operation input by the current user, displaying an interactive element interface, wherein the interactive element interface is configured to present a set of interactive elements associated with the first media content, and the set of interactive elements includes the at least one interactive element.

In accordance with one or more embodiments of the present disclosure, the method further comprises:
receiving an interaction operation of a first preset type, which is input by the current user, on a third interactive element among the at least one interactive element; and/or
receiving an interaction operation of a second preset type, which is input by the current user, on a fourth interactive element in the set of interactive elements.

In accordance with one or more embodiments of the present disclosure, the presenting, at at least one preset position in the first media content, at least one interactive element associated therewith in a superimposed manner comprises:
presenting, at the at least one preset position in the first media content, the at least one interactive element associated therewith in a superimposed manner within a preset playback progress range of the first media content, wherein the at least one interactive element has a preset association relationship with the preset playback progress range.

In accordance with one or more embodiments of the present disclosure, the method further comprises:
presenting second media content to the current user on the preset interface;
in response to an interactive element add event being triggered, entering a preset edit interface;
acquiring, based on the preset edit interface, a target media material determined by the current user for the second media content, and determining a target interactive element to be added according to the target media material;
determining, based on a position setting operation input by the current user, a target preset position associated with the target interactive element.

In accordance with one or more embodiments of the present disclosure, the method further comprises:
determining, based on a range setting operation input by the current user, a target preset playback progress range that has a preset association relationship with the target interactive element.

In accordance with one or more embodiments of the present disclosure, there is provided a media content based interaction method, which comprises, on a second user side:
presenting first media content to a second user on a preset interface, wherein the first media content is posted by a first user;
in response to an interactive element add event being triggered, entering a preset edit interface;
acquiring, based on the preset edit interface, a target media material determined by the second user for the first media content, and determining a target interactive element to be added according to the target media material;
determining, based on a position setting operation input by the second user, a target preset position associated with the target interactive element, wherein the target interactive element is used for presentation in a superimposed manner at the target preset position of the first media content in the process of presenting the first media content on the preset interface.

In accordance with one or more embodiments of the present disclosure, the method further comprises:
determining, based on a range setting operation input by the second user, a target preset playback progress range that has a preset association relationship with the target interactive element, wherein the target interactive element is used for presentation in a superimposed manner at the target preset position of the first media content within the target preset playback progress range for presenting the first media content on the preset interface.

In accordance with one or more embodiments of the present disclosure, there is provided a media content based interaction apparatus, which comprises:
a first media content presentation module, configured to present first media content to a current user on a preset interface, wherein the first media content is posted by a first user;
an interactive element display module, configured to present, at at least one preset position in the first media content, at least one interactive element associated therewith in a superimposed manner, wherein the interactive element is added by a second user, and the preset position associated with the interactive element is set by the second user.

In accordance with one or more embodiments of the present disclosure, there is provided a media content based interaction apparatus, configured on a second user side, which comprises:
a media content presentation module, configured to present first media content to a second user on a preset interface, wherein the first media content is posted by a first user;
a preset edit interface entry module, configured to enter a preset edit interface in response to an interactive element add event being triggered;
a target interactive element determination module, configured to acquire, based on the preset edit interface, a target media material determined by the second user for the first media content, and determine a target interactive element to be added according to the target media material; and
a target preset position determination module, configured to determine, based on a position setting operation input by the second user, a target preset position associated with the target interactive element, wherein the target interactive element is used for presentation in a superimposed manner at the target preset position of the first media content in the process of presenting the first media content on the preset interface.

In accordance with one or more embodiments of the present disclosure, there is provided an electronic device, comprising:
one or more processors; and
a storage device configured to store one or more programs,
wherein the one or more programs, when executed by the one or more processors, cause the one or more processors to implement the media content based interaction method provided by the embodiments of the present disclosure.

In accordance with one or more embodiments of the present disclosure, there is provided a storage medium containing computer executable instructions, which, when executed by a computer processor, are used for implementing the media content based interaction method provided by the embodiments of the present disclosure.

The foregoing description is only exemplary of the preferred embodiments of the present disclosure and is illustrative of the principles of the technology employed. It will be appreciated by those skilled in the art that the scope of the disclosure herein is not limited to the particular combination of features described above, but also encompasses other combinations of features described above or equivalents thereof without departing from the spirit of the disclosure. For example, the above features and the technical features disclosed in the present disclosure (but not limited to) having similar functions are replaced with each other to form the technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A media content based interaction method, which comprises, on a current user side:
presenting first media content to a current user on a preset interface, wherein the first media content is posted by a first user;
presenting, at at least one preset position in the first media content, at least one interactive element associated therewith in a superimposed manner, wherein the interactive element is added by a second user, and the preset position associated with the interactive element is set by the second user.

2. The method according to claim 1, wherein the interactive element is associated with a user identifier of the second user.

3. The method according to claim 1 or 2, wherein the interactive element comprises at least one media material of pictures, audio, video and text.

4. The method according to any one of claims 1-3, after presenting, at at least one preset position in the first media content, at least one interactive element associated therewith in a superimposed manner, further comprising:
playing, in response to a preset trigger operation of the current user on a first interactive element among the at least one interactive element, a sound associated with the first interactive element, wherein the first interactive element comprises audio or video.

5. The method according to claim 4, wherein the playing, in response to a preset trigger operation of the current user on a first interactive element among the at least one interactive element, a sound associated with the first interactive element comprises:
when the first media content comprises audio or video, in response to the preset trigger operation of the current user on the first interactive element among the at least one interactive element, playing the sound associated with the first interactive element and performing a weakening process on the sound associated with the first media content.

6. The method according to any one of claims 1-5, after presenting, at at least one preset position in the first media content, at least one interactive element associated therewith in a superimposed manner, further comprising:
in response to a position change operation of the current user on a second interactive element among the at least one interactive element, moving the second interactive element to a target position indicated by the position change operation for presentation.

7. The method according to claim 6, after the moving the second interactive element to a target position indicated by the position change operation for presentation, further comprising:
in response to a preset position restore event being triggered, restoring the second interactive element to the preset position associated therewith for presentation.

8. The method according to any one of claims 1-7, after presenting, at at least one preset position in the first media content, at least one interactive element associated therewith in a superimposed manner, further comprising:
in response to a preset view operation input by the current user, displaying an interactive element interface, wherein the interactive element interface is configured to present a set of interactive elements associated with the first media content, and the set of interactive elements comprises the at least one interactive element.

9. The method according to claim 1 or 8, further comprising:
receiving an interaction operation of a first preset type, which is input by the current user, on a third interactive element among the at least one interactive element; and/or
receiving an interaction operation of a second preset type, which is input by the current user, on a fourth interactive element in the set of interactive elements.

10. The method according to any one of claims 1-9, wherein the presenting, at at least one preset position in the first media content, at least one interactive element associated therewith in a superimposed manner comprises:
presenting, at at least one preset position in the first media content, the at least one interactive element associated therewith in a superimposed manner within a preset playback progress range of the first media content, wherein the at least one interactive element has a preset association relationship with the preset playback progress range.

11. The method according to any one of claims 1-10, further comprising:
presenting second media content to the current user on the preset interface;
in response to an interactive element add event being triggered, entering a preset edit interface;
acquiring, based on the preset edit interface, a target media material determined by the current user for the second media content, and determining a target interactive element to be added according to the target media material;
determining, based on a position setting operation input by the current user, a target preset position associated with the target interactive element.

12. A media content based interaction method, which comprises, on a second user side:
presenting first media content to a second user on a preset interface, wherein the first media content is posted by a first user;
in response to an interactive element add event being triggered, entering a preset edit interface;
acquiring, based on the preset edit interface, a target media material determined by the second user for the first media content, and determining a target interactive element to be added according to the target media material;
determining, based on a position setting operation input by the second user, a target preset position associated with the target interactive element, wherein the target interactive element is configured for presentation in a superimposed manner at the target preset position of the first media content in the process of presenting the first media content on the preset interface.

13. The method according to claim 12, further comprising:
determining, based on a range setting operation input by the second user, a target preset playback progress range that has a preset association relationship with the target interactive element, wherein the target interactive element is configured for presentation in a superimposed manner at the target preset position of the first media content within the target preset playback progress range for presenting the first media content on the preset interface.

14. A media content based interaction apparatus, configured on a current user side, which comprises:
a first media content presentation module, configured to present first media content to a current user on a preset interface, wherein the first media content is posted by a first user;
an interactive element display module, configured to present, at at least one preset position in the first media content, at least one interactive element associated therewith in a superimposed manner, wherein the interactive element is added by a second user, and the preset position associated with the interactive element is set by the second user.

15. The apparatus according to claim 14, comprising: modules configured to implement the method according to any one of claims 2-11.

16. A media content based interaction apparatus, configured on a second user side, which comprises:
a media content presentation module, configured to present first media content to a second user on a preset interface, wherein the first media content is posted by a first user;
a preset edit interface entry module, configured to enter a preset edit interface in response to an interactive element add event being triggered;
a target interactive element determination module, configured to acquire, based on the preset edit interface, a target media material determined by the second user for the first media content, and determine a target interactive element to be added according to the target media material; and
a target preset position determination module, configured to determine, based on a position setting operation input by the second user, a target preset position associated with the target interactive element, wherein the target interactive element is configured for presentation in a superimposed manner at the target preset position of the first media content in the process of presenting the first media content on the preset interface.

17. The apparatus according to claim 16, further comprising:
a range setting module, configured to determine, based on a range setting operation input by the second user, a target preset playback progress range that has a preset association relationship with the target interactive element, wherein the target interactive element is configured for presentation in a superimposed manner at the target preset position of the first media content within the target preset playback progress range for presenting the first media content on the preset interface.

18. An electronic device, comprising:
one or more processors; and
a storage device configured to store one or more programs,
wherein the one or more programs, when executed by the one or more processors, cause the one or more processors to implement the media content based interaction method according to any one of claims 1-13.

19. A storage medium containing computer executable instructions, which, when executed by a computer processor, are configured for implementing the media content based interaction method according to any one of claims 1-13.
